# EUROPEAN PATENT APPLICATION

(11) **EP 4 033 344 A1**
(43) Date of publication of application: **27.07.2022**
(21) Application number: 20865432.7
(22) Date of filing: 10.09.2020
(51) Int. Cl.: G06F 3/06, G06F 13/10, G11B 20/10

(54) **RECORDING DEVICE, RECORDING METHOD, RECORDING PROGRAM, AND MAGNETIC TAPE**

(30) Priority: 20.09.2019 JP 2019171509
(71) Applicant: FUJIFILM Corporation, Tokyo 106-8620 (JP)
(72) Inventor: KONDO, Michitaka, Tokyo 106-8620 (JP)
(74) Representative: Klunker IP Patentanwälte PartG mbB
(86) International application number: PCT/JP2020/034326
(87) International publication number: WO 2021/054244

(57) **Abstract**

A recording device includes an acquisition unit that acquires, for attached information attached to each of a plurality of recording target data recorded on a recording medium, a first relevance degree which is a relevance degree between pieces of the attached information according to a frequency at which data other than the recording target data attached with information having the same contents as the attached information is read out within a period determined in advance, a second-relevance-degree derivation unit that derives, for each combination of a plurality of recording target data included in the plurality of recording target data, a second relevance degree which is a relevance degree between pieces of data representing a possibility that the plurality of recording target data included in the combination is read out within the period based on the first relevance degree, and a control unit that classifies the plurality of recording target data into groups based on the second relevance degree and performs control of recording the classified data on the recording medium for each group.

## Description

### 1. Field of the Invention

The present disclosure relates to a recording device, a recording method, a recording program, and a magnetic tape.

### 2. Description of the Related Art

In the related art, for a data object, a technique in which a group of data objects is determined according to two or more dimensions of information about the data objects and the data objects are recorded in a group unit has been disclosed (refer to JP2016-522484A). In JP2016-522484A, an access history, an access frequency, an access pattern, a relationship between the data objects, and the like, which are obtained by analyzing access information, are described as an example of the dimensions of the information about the data objects.

### SUMMARY OF THE INVENTION

By the way, in a case where a plurality of data are recorded on a recording medium, it may be possible to shorten a readout time at a time of reading the data by recording the plurality of data on the recording medium for each group in consideration of a possibility of being simultaneously read out after the recording.

However, in the technique described in JP2016-522484A, it is not considered to determine the group in consideration of the possibility of being simultaneously read out after the recording for the data objects having no access information.

The present disclosure provides a recording device, a recording method, a recording program, and a magnetic tape capable of shortening a data readout time for recording target data for which access information is not present.

A first aspect of the present disclosure is a recording device that comprises an acquisition unit that acquires, for attached information attached to each of a plurality of recording target data recorded on a recording medium, a first relevance degree which is a relevance degree between pieces of the attached information according to a frequency at which data other than the recording target data attached with information having the same contents as the attached information is read out within a period determined in advance, a second-relevance-degree derivation unit that derives, for each combination of a plurality of recording target data included in the plurality of recording target data, a second relevance degree which is a relevance degree between pieces of data representing a possibility that the plurality of recording target data included in the combination is read out within the period based on the first relevance degree, and a control unit that classifies the plurality of recording target data into groups based on the second relevance degree and performs control of recording the classified data on the recording medium for each group.

In a second aspect of the present disclosure, in the first aspect, the second relevance degree may be a value derived for each combination of the plurality of recording target data and be a value that increases as a possibility that combinations of the plurality of recording target data are read out within the period is higher. The control unit may classify each of the plurality of recording target data included in a combination having the second relevance degree equal to or higher than a threshold value into the same group.

In a third aspect of the present disclosure, in the second aspect described above, the control unit may classify the plurality of recording target data into groups while changing the threshold value such that the number of the recording target data included in the same group or a size of the recording target data included in the same group is equal to or less than a value determined in advance.

A fourth aspect of the present disclosure may further comprise a first-relevance-degree derivation unit that derives the first relevance degree in the above aspect.

A fifth aspect of the present disclosure may further comprise a storage unit that stores the first relevance degree in the above aspect.

In a sixth aspect of the present disclosure, in the above aspect, the recording medium may be a magnetic tape.

A seventh aspect of the present disclosure is a recording method executed by a computer that comprises acquiring, for attached information attached to each of a plurality of recording target data recorded on a recording medium, a first relevance degree which is a relevance degree between pieces of the attached information according to a frequency at which data other than the recording target data attached with information having the same contents as the attached information is read out within a period determined in advance, deriving, for each combination of the plurality of recording target data included in the plurality of recording target data, a second relevance degree which is a relevance degree between pieces of data representing a possibility that the plurality of recording target data included in the combination is read out within the period based on the first relevance degree, and classifying the plurality of recording target data into groups based on the second relevance degree and performing control of recording the classified data on the recording medium for each group.

An eighth aspect of the present disclosure is a recording program causing a computer to execute a process comprising acquiring, for attached information attached to each of a plurality of recording target data recorded on a recording medium, a first relevance degree which is a relevance degree between pieces of the attached information according to a frequency at which data other than the recording target data attached with information having the same contents as the attached information is read out within a period determined in advance, deriving, for each combination of the plurality of recording target data included in the plurality of recording target data, a second relevance degree which is a relevance degree between pieces of data representing a possibility that the plurality of recording target data included in the combination is read out within the period based on the first relevance degree, and classifying the plurality of recording target data into groups based on the second relevance degree and performing control of recording the classified data on the recording medium for each group.

A ninth aspect of the present disclosure is a magnetic tape on which a plurality of recording target data is recorded, in which the plurality of recording target data are recorded for each group into which the plurality of recording target data are classified based on a second relevance degree, which is derived based on a first relevance degree, for each combination of the plurality of recording target data included in the plurality of recording target data, the first relevance degree being a relevance degree between pieces of the attached information according to a frequency at which data other than the recording target data attached with information having the same contents as the attached information is read out within a period determined in advance for attached information attached to each of the plurality of recording target data, the second relevance degree being a relevance degree between pieces of data representing a possibility that the plurality of recording target data included in the combination is read out within the period based on the first relevance degree.

A tenth aspect of the present disclosure is a recording device that comprises a memory that stores a command to be executed by a computer and a processor configured to execute the stored command. The processor acquires, for attached information attached to each of a plurality of recording target data recorded on a recording medium, a first relevance degree which is a relevance degree between pieces of the attached information according to a frequency at which data other than the recording target data attached with information having the same contents as the attached information is read out within a period determined in advance, derives, for each combination of the plurality of recording target data included in the plurality of recording target data, a second relevance degree which is a relevance degree between pieces of data representing a possibility that the plurality of recording target data included in the combination is read out within the period based on the first relevance degree, and classifies the plurality of recording target data into groups based on the second relevance degree and performs control of recording the classified data on the recording medium for each group.

According to the above aspect, the recording device, the recording method, the recording program, and the magnetic tape of the present disclosure can shorten the data readout time for the recording target data for which the access information is not present.

### BRIEF DESCRIPTION OF THE DRAWINGS

Fig. 1 is a block diagram showing an example of a configuration of a recording/readout system according to an exemplary embodiment.
Fig. 2 is a block diagram showing an example of a hardware configuration of an information processing device according to an exemplary embodiment.
Fig. 3 is a block diagram showing an example of a functional configuration of the information processing device according to an exemplary embodiment.
Fig. 4 is a table showing attached information attached to recorded data in Specific Example 1.
Fig. 5 is a table showing a readout log and attached information attached to readout data in Specific Example 1.
Fig. 6 is a table for describing a derivation process of a first relevance degree in Specific Example 1.
Fig. 7 is a table for describing the derivation process of the first relevance degree in Specific Example 1.
Fig. 8 is a diagram showing a first-relevance-degree score table in Specific Example 1.
Fig. 9 is a table showing recording target data in Specific Example 1.
Fig. 10 is a table showing a second relevance degree in Specific Example 1.
Fig. 11 is a diagram showing a network structure based on the second relevance degree in Specific Example 1.
Fig. 12 is a table showing the attached information attached to the recorded data in Specific Example 2.
Fig. 13 is a table showing the readout log and the attached information attached to the readout data in Specific Example 2.
Fig. 14 is a table for describing the derivation process of the first relevance degree in Specific Example 2.
Fig. 15 is a table for describing the derivation process of the first relevance degree in Specific Example 2.
Fig. 16 is a diagram showing the first-relevance-degree score table in Specific Example 2.
Fig. 17 is a table showing the recording target data in Specific Example 2.
Fig. 18 is a table showing the second relevance degree in Specific Example 2.
Fig. 19 is a diagram showing a network structure based on the second relevance degree in Specific Example 2.
Fig. 20 is a flowchart showing an example of a record process according to an exemplary embodiment.

### DESCRIPTION OF EMBODIMENTS

Hereinafter, an embodiment for implementing a technique of the present disclosure will be described in detail with reference to drawings.

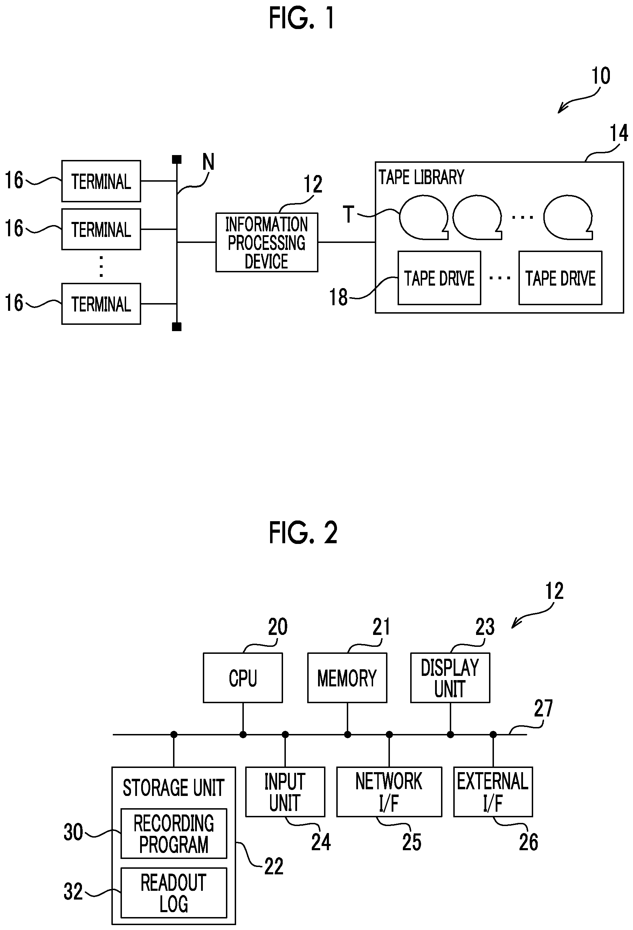

First, a configuration of a recording/readout system 10 according to the present exemplary embodiment will be described with reference to Fig. 1. As shown in Fig. 1, the recording/readout system 10 includes an information processing device 12 and a tape library 14. The tape library 14 is connected to the information processing device 12. The information processing device 12 and a plurality of terminals 16 are connected to a network N and can communicate through the network N.

The tape library 14 comprises a plurality of slots (not shown) and a plurality of tape drives 18, and a magnetic tape T as an example of a recording medium is stored in each slot. An example of the magnetic tape T includes a linear tape-open (LTO) tape.

In a case where the information processing device 12 writes or reads out data on the magnetic tape T, the magnetic tape T to be written or read out is loaded from the slot into any one of the tape drives 18. In a case where the information processing device 12 completes the writing or readout for the magnetic tape T loaded into the tape drive 18, the magnetic tape T is unloaded from the tape drive 18 to the originally stored slot.

Next, a hardware configuration of the information processing device 12 according to the present exemplary embodiment will be described with reference to Fig. 2. An example of the information processing device 12 includes a server computer. The information processing device 12 is an example of a recording device that records the data on the magnetic tape T.

As shown in Fig. 2, the information processing device 12 includes a central processing unit (CPU) 20, a memory 21 as a temporary storage area, and a nonvolatile storage unit 22. The information processing device 12 includes a display unit 23 such as a liquid crystal display, an input unit 24 such as a keyboard and a mouse, a network interface (I/F) 25 connected to the network N, and an external I/F 26 connected to the tape library 14. The CPU 20, the memory 21, the storage unit 22, the display unit 23, the input unit 24, the network I/F 25, and the external I/F 26 are connected to a bus 27.

The storage unit 22 is formed by a hard disk drive (HDD), a solid state drive (SSD), a flash memory, and the like. The storage unit 22 as a storage medium stores a recording program 30. The CPU 20 reads out the recording program 30 from the storage unit 22, develops the program in the memory 21, and executes the developed recording program 30.

The storage unit 22 stores a readout log 32. In the readout log 32, identification information of the data recorded on the recording medium (hereinafter referred to as "recorded data") read out by the terminal 16 and a date and time at which the recorded data is read out are recorded in association with each other. The readout log 32 is not limited to the readout log by the terminal 16 from the magnetic tape T according to the present exemplary embodiment, but may be a readout log by the terminal 16 from another recording medium (for example, storage unit 22). The date and time at which the data in the readout log 32 is read out may be, for example, a date and time at which the data readout is started, a date and time at which the data readout is completed, or both of the dates and times. In the present exemplary embodiment, a log in which recording target data to be recorded on the magnetic tape T by the information processing device 12 is read out is assumed to be not included in the readout log 32.

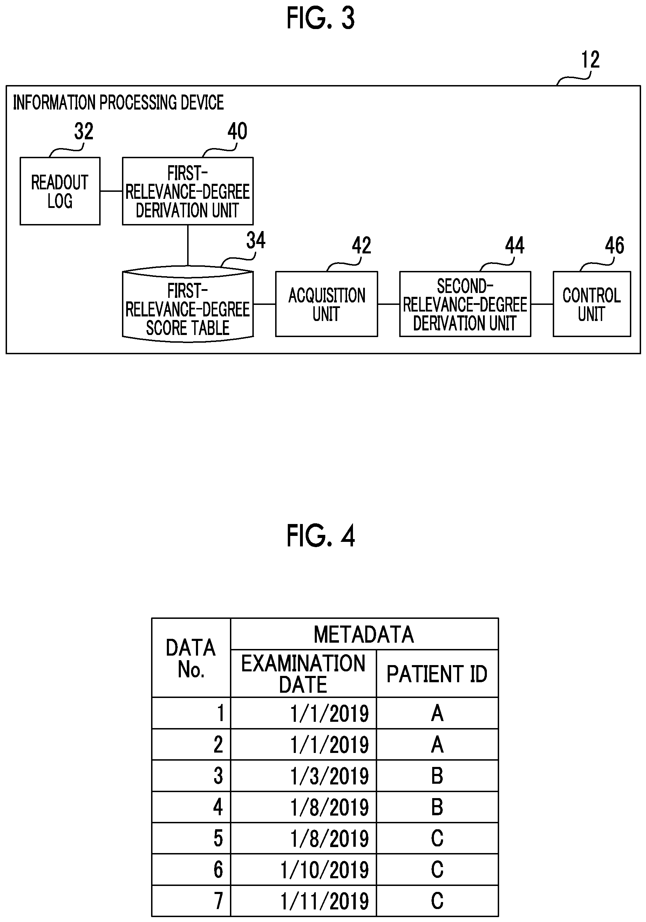

Next, a functional configuration of the information processing device 12 according to the exemplary present embodiment will be described with reference to Fig. 3. As shown in Fig. 3, the information processing device 12 includes a first-relevance-degree derivation unit 40, an acquisition unit 42, a second-relevance-degree derivation unit 44, and a control unit 46. The information processing device 12 causes the CPU 20 to execute the recording program 30 to function as the first-relevance-degree derivation unit 40, the acquisition unit 42, the second-relevance-degree derivation unit 44, and the control unit 46. Further, in a predetermined storage area of the storage unit 22, a first relevance degree derived by the first-relevance-degree derivation unit 40 is stored in the form of a first-relevance-degree score table 34.

Based on the readout log 32, the first-relevance-degree derivation unit 40 derives, for attached information attached to each of a plurality of recording target data, a relevance degree between the attached information (hereinafter referred to as "first relevance degree") according to a frequency at which data other than the recording target data attached with information having the same contents as the attached information is simultaneously read out. The first-relevance-degree derivation unit 40 stores the derived first relevance degree in the storage unit 22 in the form of the first-relevance-degree score table 34. The term "recording target data" is data recorded on the magnetic tape T. An example of the term "data other than the recording target data" includes the recorded data described above.

An example of the term "attached information" includes a tag element of metadata related to the data. Specifically, for example, in a case where the data is medical data used for an electronic medical record, the "attached information" includes a value of "patient identification (ID)" to identify which patient's data each piece of data is.

The term "simultaneously" may be within a period determined in advance. For example, the term "simultaneously" is also used in a case where an instruction to read out a plurality of data at a time is input by one user and the plurality of data are continuously read out. For example, the term "simultaneously" is also used in a case where an instruction to read out the data is input by each of a plurality of users within a period determined in advance and a plurality of data desired by each of the plurality of users are read out. Hereinafter, the same applies to the case of describing "simultaneously".

That is, the first-relevance-degree derivation unit 40 analyzes a situation of the simultaneous readout of the data other than the recording target data from the readout log 32 to derive the first relevance degree indicating the relevance degree between the attached information for the attached information attached to the data other than the recording target data. Therefore, the first relevance degree takes a value according to the frequency at which the data other than the recording target data is simultaneously read out.

The acquisition unit 42 acquires the first relevance degree related to the attached information attached to each of the plurality of recording target data recorded on the magnetic tape T from the first-relevance-degree score table 34 created from the readout log 32 for the data other than the recording target data.

Based on the first relevance degree of the recording target data acquired by the acquisition unit 42, the second-relevance-degree derivation unit 44 derives, for each combination of the plurality (two in the present exemplary embodiment) of recording target data included in all pieces of the recording target data, a relevance degree between the data (hereinafter referred to as "second relevance degree") representing a possibility that the plurality of recording target data included in the combination are simultaneously read out.

That is, the second relevance degree indicates the relevance degree between the recording target data and takes a value according to the first relevance degree indicating the relevance degree between the attached information attached to each of the plurality of recording target data included in the combination. The second relevance degree is a value derived for each combination of the plurality of recording target data and is a value that increases as a possibility that combinations of the plurality of recording target data are simultaneously read out is higher.

The second relevance derivation unit 44 may derive the second relevance degree for each combination of the plurality of recording target data included in a part of three or more pieces of recording target data among all pieces of the recording target data.

The control unit 46 classifies the plurality of recording target data into groups based on the second relevance degree derived by the second-relevance-degree derivation unit 44 and performs control of recording the data on the magnetic tape T for each group. Specifically, the control unit 46 classifies each of the plurality of recording target data included in a combination having the second relevance degree equal to or higher than a threshold value into the same group. The control unit 46 outputs the recording target data included in the group and an instruction to record the recording target data to the tape drive 18 for each classified group. Accordingly, the tape drive 18 packs the recording target data included in the group and records the data on the magnetic tape T. In a case where the recording target data included in the group is recorded and then simultaneously read out, the tape drive 18 may perform the recording such that a readout time can be shortened and may record the recording target data included in the group at positions close to each other on the magnetic tape T or the like.

The control unit 46 may set various restrictions on the number of recording target data included in the same group and the number of groups in a case where all pieces of the recording target data are classified into groups. For example, information input by the user through the input unit 24 can be used as the information regarding the restrictions.

For example, the control unit 46 may classify the plurality of recording target data into groups while changing a threshold value such that the number of recording target data included in the same group is equal to or less than a maximum value determined in advance. The control unit 46 may classify the plurality of recording target data into groups while changing the threshold value such that the number of recording target data included in the same group is equal to or higher than a minimum value determined in advance. The control unit 46 may classify the plurality of recording target data into groups while changing the threshold value such that the number of recording target data included in the same group is equal to or higher than the minimum value determined in advance and equal to or less than the maximum value determined in advance.

The control unit 46 may classify the plurality of recording target data into groups while changing the threshold value such that the number of groups in a case where all pieces of the recording target data are classified into groups is the number of groups determined in advance.

The control unit 46 may classify, based on a size of the recording target data included in the same group, the plurality of recording target data based on the number of recording target data included in the same group as described above. In this case, the control unit 46 classifies the recording target data into groups such that a total size of the recording target data included in each group is equal to or less than an upper limit value determined in advance.

As described above, the information processing device 12 derives the second relevance degree indicating the relevance degree between the data in the recording target data for which the readout log is not present based on the first relevance degree, which is derived by referring to the readout log 32 of the recorded data, indicating the relevance degree between the attached information. That is, the second relevance degree for the recording target data for which the readout log is not present is derived from the attached information attached to the recording target data and corresponding first relevance degree. The information processing device 12 performs control of classifying the recording target data, which is estimated to have a high possibility of being simultaneously read out, into the same group based on the second relevance degree, and recording the data on the magnetic tape T for each group. With the information processing device 12, the plurality of data can be recorded on the recording medium for each group in consideration of the possibility of being simultaneously read out after the recording even for the recording target data for which access information such as the readout log is not present. Therefore, it is possible to shorten the data readout time for the recording target data for which the access information is not present.

Hereinafter, in the information processing device 12 according to the present exemplary embodiment, specific examples of a derivation process of the first relevance degree by the first-relevance-degree derivation unit 40, a derivation process of the second relevance degree by the second-relevance-degree derivation unit 44, and a record process by the control unit 46 will be described.

### [Specific Example 1]

Specific Example 1 will be described with reference to Figs. 4 to 11. Fig. 4 is a table showing attribute information as an example of the attached information attached to the recorded data in Specific Example 1. The metadata is attached to each of the recorded data and includes the attribute information indicating an attribute of corresponding recorded data. Pieces of the attribute information are tagged with each attribute name and are included in the metadata.

For example, in a case where the recorded data is medical data, the metadata includes the attribute information related to an examination date tagged with "examination date" and the attribute information to identify the patient tagged with "patient ID", as shown in Fig. 4. The attribute information with the patient ID tag includes information of "A", "B", and "C" assigned to each patient. In the following, an example using the patient ID assigned to each patient as the attached information will be described.

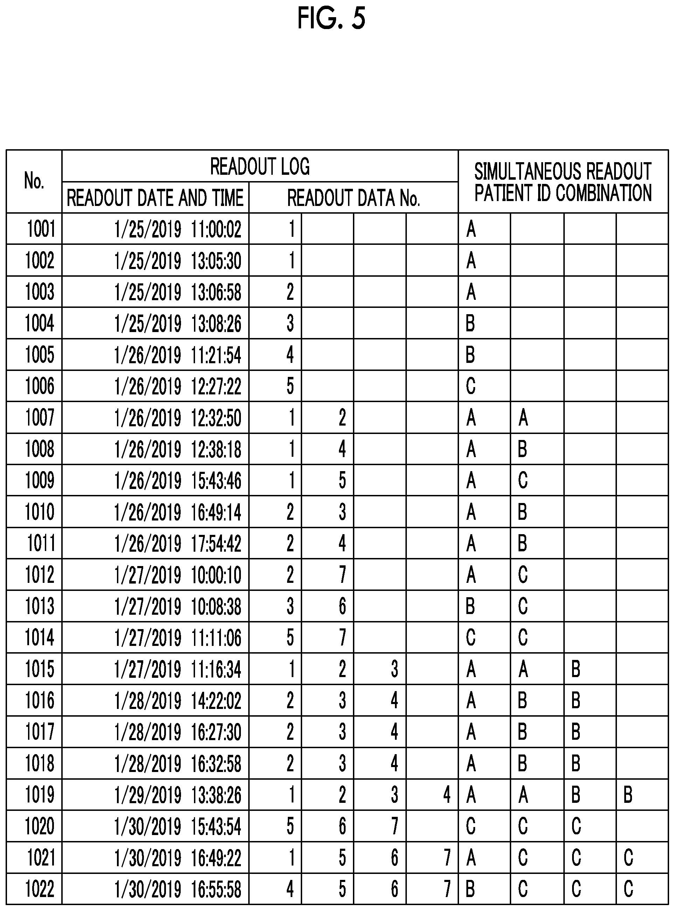

Fig. 5 is a table showing the readout log 32 and the attached information attached to the readout data in Specific Example 1 and shows a history of the recorded data shown in Fig. 4 being read out in the past. As shown in Fig. 5, a readout date and time of the readout recorded data and data No. which is the identification information of the readout recorded data are recorded in the readout log 32 in association with each other.

In the example of Fig. 5, for the sake of clarity, the log in a case where the plurality of recorded data are simultaneously read out is described in one line for each readout date and time. For the sake of clarity, the attribute information with the patient ID tag included in the metadata attached to the recorded data is described in "simultaneous readout patient ID combination". Further, "No." at a left end of Fig. 5 is a number for distinguishing each record of the readout log in the following description.

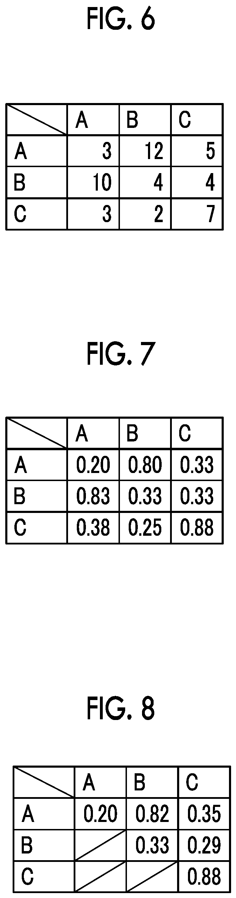

First, the first-relevance-degree derivation unit 40 refers to the readout log 32 and counts the number of times N1 that the recorded data attached with the attribute information included in the combination is simultaneously read out for each combination of the attribute information. Fig. 6 is a table showing the number of times N1 simultaneously read out for each combination of attribute information "A", "B", and "C" obtained from the readout log 32 of Fig. 5.

For example, an upper left cell in the table of Fig. 6 indicates the number of times N1 that the recorded data attached with the attribute information "A" is simultaneously read out as another piece of recorded data attached with the attribute information "A". From the readout log 32, the first-relevance-degree derivation unit 40 counts that this combination is simultaneously read out three times in total of once at No. 1007, once at No. 1015, and once at No. 1019.

For example, an upper right cell in the table of Fig. 6 indicates the number of times N1 that the recorded data attached with the attribute information "A" is simultaneously read out as another piece of recorded data attached with the attribute information "C". From the readout log 32, the first-relevance-degree derivation unit 40 counts that this combination is simultaneously read out five times in total of once at No. 1009, once at No. 1012, and three times at No. 1021.

For example, the lower left cell in the table of Fig. 6 indicates the number of times N1 that the recorded data attached with the attribute information "C" is simultaneously read out as another piece of recorded data attached with the attribute information "A". From the readout log 32, the first-relevance-degree derivation unit 40 counts that this combination is simultaneously read out three times in total of once at No. 1009, once at No. 1012, and once at No. 1021.

Next, the first-relevance-degree derivation unit 40 refers to the readout log 32 and counts the number of times N2 that the recorded data attached with the attribute information is read out for each piece of attribute information. For example, the number of times N2 that the recorded data attached with the attribute information "C" obtained from the readout log 32 in Fig. 5 is read out is eight times in total of No. 1006, 1009, 1012, 1013, 1014, 1020, 1021, and 1022. Similarly, the number of times N2 that the recorded data attached with the attribute information "A" is read out is 15 times, and the number of times N2 that the recorded data attached with the attribute information "B" is read out is 12 times. In a case where each of the plurality of recorded data simultaneously read out is attached with the attribute information indicating the same contents as in No. 1014, it is counted as once.

Next, the first-relevance-degree derivation unit 40 obtains a score obtained by dividing the number of times N1 simultaneously read out for each combination of the attribute information by the number of times N2 read out for each piece of attribute information. This score is hereinafter referred to as "directed score" since the attribute information "C" for the attribute information "A" and the attribute information "A" for the attribute information "C" are distinguished. The directed score becomes a larger value as the number of times N1 simultaneously read out for each combination of the attribute information is larger.

Fig. 7 is a diagram showing a score table of the directed score in Specific Example 1. For example, each value in the upper row of the table of Fig. 7 is obtained by dividing each value in the upper row of the table of Fig. 6 by 15 which is the number of times N2 that the recorded data attached with the attribute information "A" is read out.

Next, the first-relevance-degree derivation unit 40 derives a value obtained by converting the directed score into an undirected score as the first relevance degree and stores the first relevance degree in the storage unit 22 in the form of the first-relevance-degree score table 34. Specifically, for example, the first-relevance-degree derivation unit 40 derives an average value of the directed score of the attribute information "C" for the attribute information "A" and the directed score of the attribute information "A" for the attribute information "C" as the first relevance degree between the attribute information "A" and the attribute information "C". That is, the first relevance degree is an undirected score indicating the relevance degree between the attribute information "A" and the attribute information "C".

For example, in the example of Fig. 7, the directed score in a case where the recorded data attached with the attribute information "A" is simultaneously read out as another piece of recorded data attached with the attribute information "C" is 0.33. On the other hand, the directed score in a case where the recorded data attached with the attribute information "C" is simultaneously read out as another piece of recorded data attached with the attribute information "A" is 0.38. As the first relevance degree between the attribute information "A" and the attribute information "C", the first-relevance-degree derivation unit 40 calculates 0.35, which is the average of the attribute information "A" and the attribute information "C". The first-relevance-degree score table 34 in Specific Example 1 obtained as described above is shown in Fig. 8.

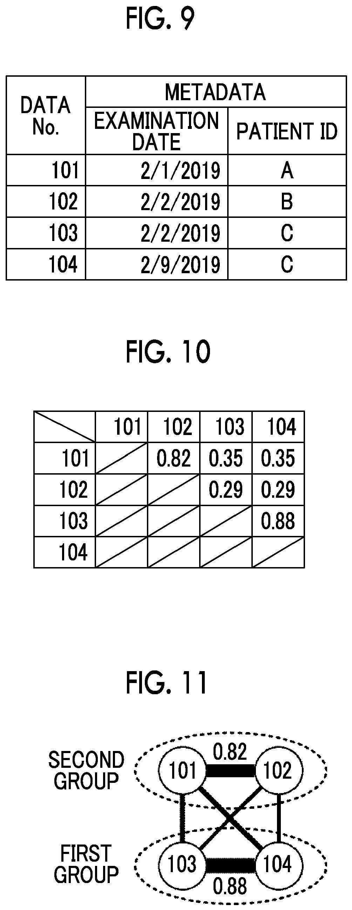

The acquisition unit 42 acquires corresponding first relevance degree from the first-relevance-degree score table 34 for the attribute information attached to each of the plurality of recording target data. Fig. 9 is a table showing the attribute information attached to the recording target data in Specific Example 1, and the attribute information attached to the recording target data is the same attribute information as the recorded data. The acquisition unit 42 acquires the first relevance degree from the first-relevance-degree score table 34 exemplified in Fig. 8 for each combination (AB, AC, BC, and CC) of the attribute information "A", "B", "C", and "C" attached to each of the recording target data.

The second-relevance-degree derivation unit 44 derives the second relevance degree for each combination of the recording target data based on the first relevance degree acquired by the acquisition unit 42. Specifically, the second relevance derivation unit 44 derives the first relevance degree between the attribute information attached to each of the plurality of recording target data included in the combination as the second relevance degree between the plurality of recording target data included in the combination. Fig. 10 is a table showing the second relevance degree for each combination of data No. 101 to 104 of the recording target data, which is obtained based on the first-relevance-degree score table 34 of Fig. 8.

For example, the second-relevance-degree derivation unit 44 derives the second relevance degree of the combination of data No. 101 of the attribute information "A" and data No. 102 of the attribute information "B" from the first relevance degree between the attribute information "A" and the attribute information "B". In this case, since the first relevance degree between the attribute information "A" and the attribute information "B" is 0.82, the second relevance degree between pieces of data No. 101 and data No. 102 is 0.82.

Fig. 11 is a schematic diagram representing the second relevance degree for each combination of the recording target data in Specific Example 1 as a network structure. In the example of Fig. 11, there is a network structure in which a straight line connecting the data is thicker as the second relevance degree shown in Fig. 10 is higher.

The control unit 46 sets the threshold value and classifies each of the plurality of recording target data included in the combination having the second relevance degree equal to or higher than the threshold value into the same group based on the second relevance degree derived by the second-relevance-degree derivation unit 44. As the threshold value, for example, a representative value such as a maximum value, an average value, or a minimum value calculated from the second relevance degree can be applied.

For example, the control unit 46 sets the threshold value to 0.88, which is the maximum value of the second relevance degree shown in Fig. 10, and classifies each of data No. 103 and data No. 104 included in a combination having the second relevance degree of 0.88 or more into a first group, which is the same group.

Next, the control unit 46 lowers the threshold value and classifies the combination having the second relevance degree equal to or higher than the threshold value into the same group for each of unclassified recording target data. For example, the control unit 46 lowers the threshold value by a step width determined in advance (for example, 0.01) until the second relevance degree having a value equal to or higher than the threshold value appears from the second relevance degree related to each of unclassified data No. 101 and 102. In a case where the threshold value becomes 0.82, the control unit 26 classifies each of data No. 101 and data No. 102 included in the combination having the second relevance degree of 0.82 or more into a second group, which is the same group.

Next, the control unit 46 performs control of recording the plurality of recording target data on the magnetic tape T for each classified group.

### [Specific Example 2]

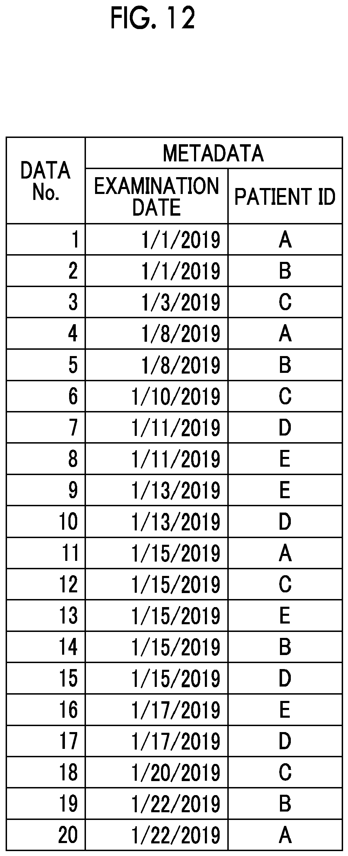

Specific Example 2 will be described with reference to Figs. 12 to 19. Specific Example 2 is an example in which a type of the attribute information with the patient ID tag of the recorded data and the recording target data in Specific Example 1 is increased, and the number of the recording target data is increased. Since the derivation process of the first relevance degree by the first-relevance-degree derivation unit 40 and the derivation process of the second relevance degree by the second-relevance-degree derivation unit 44 are the same as the derivation processes in Specific Example 1, description thereof will be omitted.

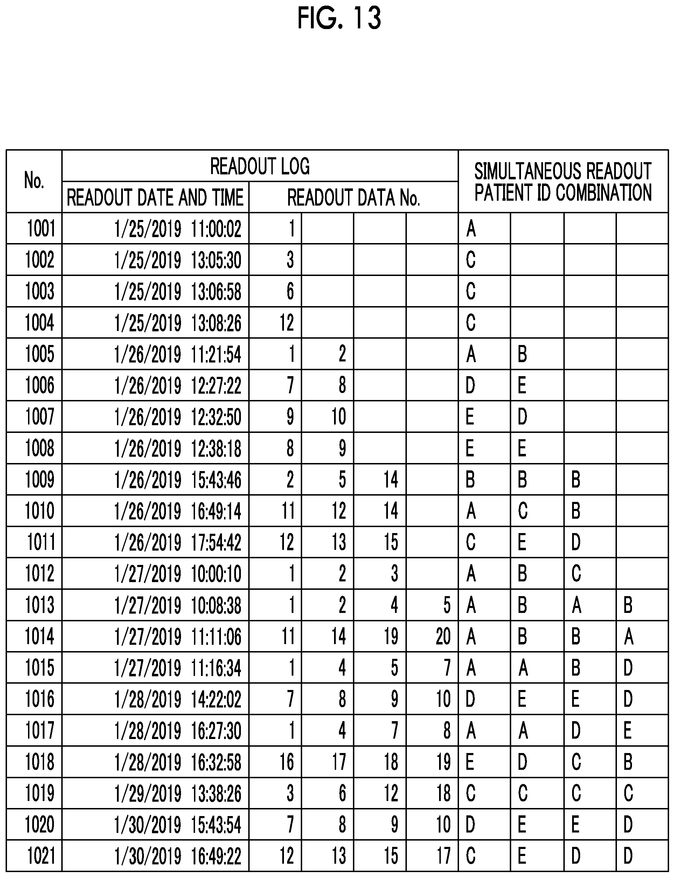

Fig. 12 is a table showing the attribute information as an example of the attached information attached to the recorded data in Specific Example 2. In Specific Example 2, information of "A", "B", "C", "D", and "E" assigned to each patient is included as the attribute information with the patient ID tag. Fig. 13 is a table showing the readout log 32 and the attached information attached to the readout data in Specific Example 2.

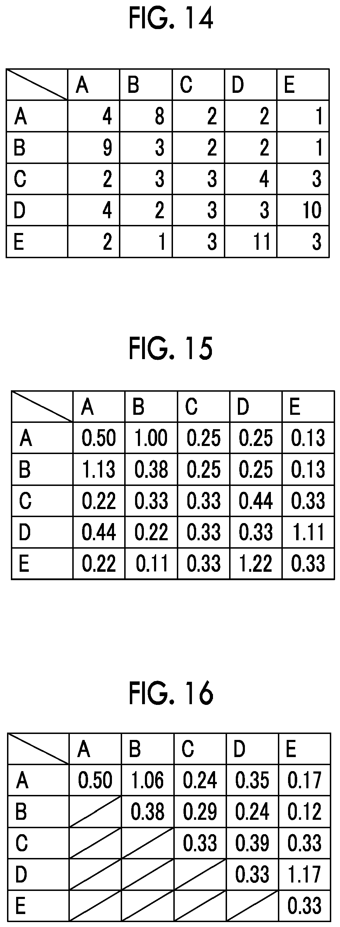

Fig. 14 is a table showing the number of times N1 of the attribute information "A", "B", "C", "D", and "E" being simultaneously read out for each combination, which is obtained from the readout log 32 of Fig. 13. Fig. 15 is a diagram showing the score table of the directed score in Specific Example 2. Fig. 16 is a diagram showing the first-relevance-degree score table 34 in Specific Example 2.

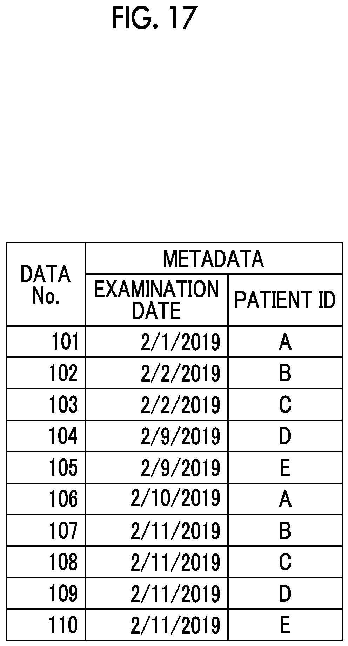

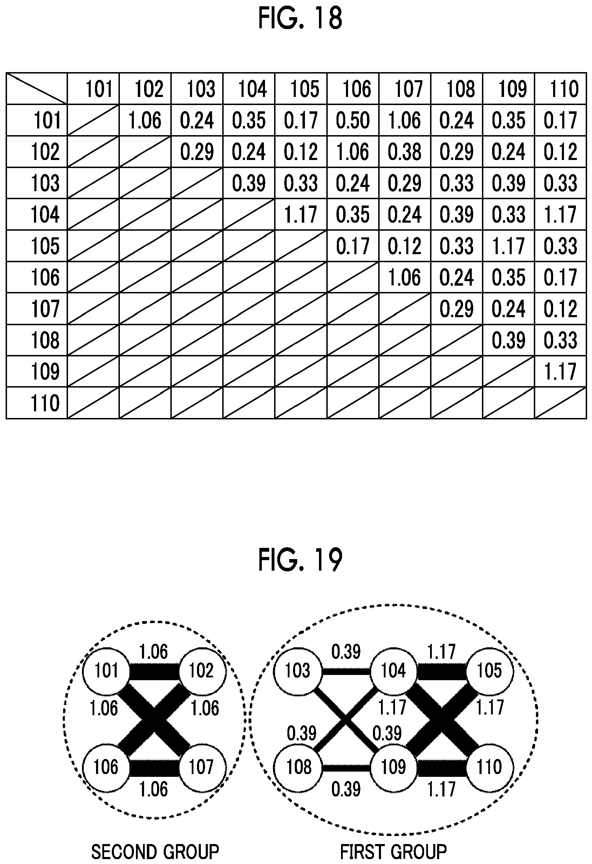

Fig. 17 is a table showing the attribute information attached to the recording target data in Specific Example 2. Fig. 18 is a table showing the second relevance degree for each combination of data No. 101 to 110 of the recording target data, which is obtained based on the first-relevance-degree score table 34 of Fig. 16.

Fig. 19 is a schematic diagram showing a part of the second relevance degree for each combination of the recording target data in Specific Example 2 as the network structure. In the present specific example, the control unit 46 sets the threshold value to 1.17, which is the maximum value of the second relevance degree shown in Fig. 18, and classifies each of data No. 104 and data No. 105 included in the combination having the second relevance degree of 1.17 or more into the first group, which is the same group. The control unit 46 classifies data No. 109 into the same first group since the second relevance degree of the combination with data No. 105 classified into the first group is 1.17 or more. The control unit 46 classifies data No. 110 into the same first group since the second relevance degree of the combination with data No. 104 classified into the first group is 1.17 or more. That is, the control unit 46 classifies each of data No. 104, 105, 109, and 110 into the first group, which is the same group.

Next, the control unit 46 lowers the threshold value and classifies the combination having the second relevance degree equal to or higher than the threshold value for the unclassified recording target data into the same group. For example, the control unit 46 lowers the threshold value by a step width determined in advance (for example, 0.01) until the second relevance degree having a value equal to or higher than the threshold value appears from the second relevance degree related to each of unclassified data No. 101 to 103 and 106 to 108. In a case where the threshold value becomes 1.06, the control unit 26 classifies each of data No. 101, 102, 106, and 107 included in the combination having the second relevance degree of 1.06 or more into the second group, which is the same group.

Next, the control unit 46 repeats the above process until the classification for all pieces of the recording target data is completed. For example, the control unit 46 lowers the threshold value by 0.01 until the second relevance degree having the value equal to or higher than the threshold value appears from the second relevance degree related to each of unclassified data No. 103 and 108. In a case where the threshold value becomes 0.39, the control unit 26 classifies each of data No. 103, 104, 108, and 109 included in the combination having the second relevance degree of 0.39 or more into the same group. Since data No. 104 and data No. 109 are already classified into the first group, the control unit 46 classifies data No. 103 and 108 also into the first group.

Regarding the classification of groups, in a case where there are restrictions on the number of recording target data included in the same group and the number of groups in a case where all pieces of the recording target data are classified into the groups, the control unit 46 classifies the groups to meet the restrictions.

For example, in a case where the maximum number of recording target data included in the same group is restricted to four, data No. 103 and 108 cannot be classified into the first group, as described above. Therefore, the control unit 46 may classify data No. 103 and 108 as individual third and fourth groups, respectively.

For example, in a case where the minimum value of the number of recording target data included in the same group is restricted to two, each of data No. 103 and 108 cannot be classified as the individual group, as described above. Therefore, in this case, the control unit 46 classifies each of data No. 103 and 108 into a third group, which is the same group.

For example, in a case where the number of groups in a case where all pieces of the plurality of recording target data are classified into the groups is restricted to three, the control unit 46 does not classify each of data No. 103 and 108 as the individual group and classifies data No. 103 and 108 into the third group, which is the same group.

Next, the control unit 46 performs control of recording the plurality of recording target data on the magnetic tape T for each classified group.

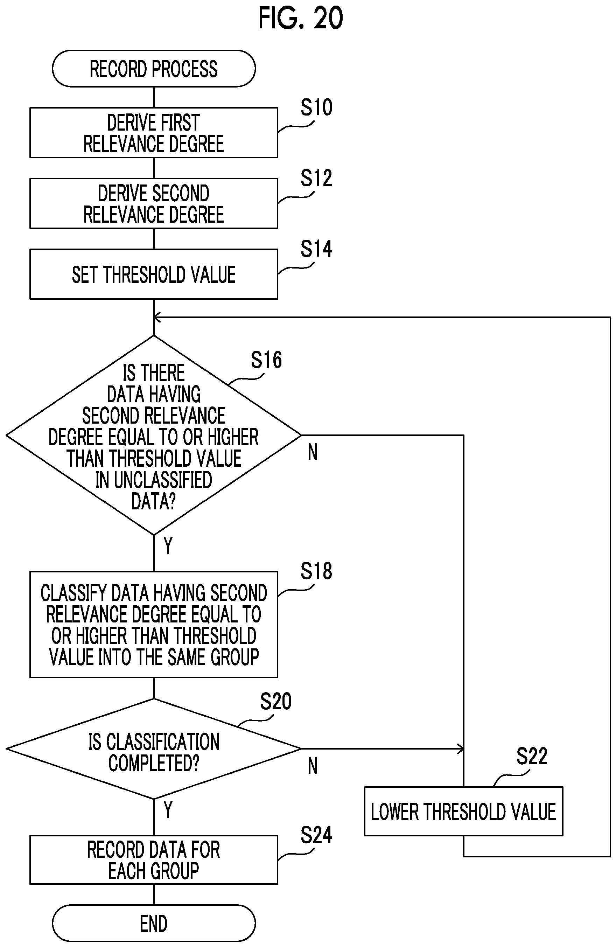

Next, an action of the information processing device 12 according to the present exemplary embodiment will be described with reference to Fig. 20. The CPU 20 executes the recording program 30 to execute the record process shown in Fig. 20. The record process shown in Fig. 20 is executed, for example, in a case where the user inputs the instruction to record the data through the input unit 24.

In step S10 of Fig. 20, the first-relevance-degree derivation unit 40 derives the first relevance degree for the attached information attached to each of the plurality of recording target data, as described above. In step S12, the second-relevance-degree derivation unit 44 derives the second relevance degree for each combination of the plurality of recording target data included in the plurality of recording target data, as described above. In step S14, the control unit 46 sets the threshold value to the maximum value of the second relevance degree, as described above.

In step S16, the control unit 46 determines whether or not there is data equal to or higher than the threshold value for the second relevance degree related to the unclassified recording target data. In a case where affirmative determination is made in step S16, in step S 18, the control unit 46 classifies each of the plurality of recording target data included in the combination having the second relevance degree equal to or higher than the threshold value into the same group. On the other hand, in a case where negative determination is made in step S16, in step S22, the control unit 46 lowers the threshold value and returns to step S16.

In step S20, the control unit 46 determines whether or not the classification for all pieces of the recording target data is completed. In a case where various restrictions are provided regarding the classification of the group as described above, in step S20, the control unit 46 determines whether or not the restrictions are satisfied. In a case where negative determination is made in step S20, in step S22, the control unit 46 lowers the threshold value and returns to step S16. On the other hand, in a case where affirmative determination is made in step S20, in step S24, the control unit 46 performs control of recording the recording target data on the magnetic tape T for each group. In a case where the process of step S24 ends, the present record process ends.

As described above, according to the present exemplary embodiment, for the attached information attached to each of the plurality of recording target data recorded on the recording medium, the first relevance degree, which is the relevance degree between the attached information according to the frequency at which the data other than the recording target data attached with the information having the same contents as the attached information is read out within a period determined in advance, is acquired. Based on the acquired first relevance degree, for each combination of the plurality of recording target data included in the plurality of recording target data, the second relevance degree, which is the relevance degree between the data representing the possibility that the plurality of recording target data included in the combination are read out within the period, is derived. Based on the derived second relevance degree, the plurality of recording target data are classified into the groups and the data is recorded on the recording medium for each group. Therefore, it is possible to record the plurality of data on the recording medium for each group in consideration of the possibility of being simultaneously read out after the recording even for the recording target data for which access information such as the readout log is not present, and it is possible to shorten the data readout time for the recording target data for which the access information is not present.

In the above exemplary embodiment, the case where the magnetic tape is applied as the recording medium has been described, but the present disclosure is not limited thereto. A recording medium other than the magnetic tape may be applied as the recording medium.

In the above exemplary embodiment, the form in which the first relevance degree is derived each time the record process is executed has been described, but the present disclosure is not limited thereto. The first-relevance-degree derivation unit 40 may derive the first relevance degree at a timing determined in advance based on the readout log 32 and store the first relevance degree in the storage unit. According to such a form, the first relevance degree is already derived at the timing at which the instruction to record the recording target data to the magnetic tape T is input to the information processing device 12. Therefore, it is possible to shorten the time to derive the first relevance degree and shorten the time required for the record process. An example of the timing determined in advance in this case includes a regular timing such as once a day.

In the above exemplary embodiment, the form in which the first-relevance-degree derivation unit 40 derives the first relevance degree based on the readout log 32 has been described, but the present disclosure is not limited thereto. For example, the first relevance may be derived by a device other than the information processing device 12 such as the terminal 16, and the acquisition unit 42 may acquire the first relevance from a device other than the information processing device 12.

In the above exemplary embodiment, the form in which the first relevance degree is derived for one type of the attribute information among the attached information attached to each of the recording target data and the second relevance degree is derived based on the first relevance degree for one type of the attribute information has been described, but the present disclosure is not limited thereto. For example, the first-relevance-degree derivation unit 40 may derive the first relevance degree for each of a plurality of types of the attribute information among the attached information attached to each of the recording target data. In this case, the second relevance derivation unit 44 may derive the second relevance degree based on the representative value such as an average value, a weighted average value, a maximum value, or a minimum value for the first relevance of each of the plurality of types of the attribute information attached to the recording target data.

The derivation process of the first relevance degree by the first-relevance-degree derivation unit 40, the derivation process of the second relevance degree by the second-relevance-degree derivation unit 44, and the record process by the control unit 46 shown in the above exemplary embodiment are examples, and the present disclosure is not limited to the example shown in the above exemplary embodiment.

In the above exemplary embodiment, for example, the following various processors can be used as hardware structures of processing units that execute various pieces of processing, such as the first-relevance-degree derivation unit 40, the second-relevance-degree derivation unit 44, and the control unit 46. The various processors include a programmable logic device (PLD) which is a processor whose circuit configuration is changeable after manufacturing such as a field programmable gate array (FPGA), a dedicated electric circuit which is a processor having a circuit configuration exclusively designed to execute specific processing such as an application specific integrated circuit (ASIC), and the like, in addition to the CPU which is a general-purpose processor that executes software (program) to function as various processing units, as described above.

One processing unit may be configured by one of the various processors or a combination of two or more processors of the same type or different types (for example, a combination of a plurality of FPGAs or a combination of a CPU and an FPGA). A plurality of processing units may be configured by one processor. As an example of configuring the plurality of processing units with one processor, first, there is a form in which one processor is configured by a combination of one or more CPUs and software and the processor functions as the plurality of processing units, as represented by computers such as a client and a server. Second, there is a form in which a processor that realizes the functions of the entire system including the plurality of processing units with one integrated circuit (IC) chip is used, as represented by a system-on-chip (SoC) or the like. As described above, the various processing units are configured using one or more of the various processors as the hardware structure.

Further, more specifically, a circuitry combining circuit elements such as semiconductor elements can be used as the hardware structure of the various processors.

In the above exemplary embodiment, the form in which the recording program 30 is stored (installed) in the storage unit 22 in advance has been described, but the present disclosure is not limited thereto. The recording program 30 may be provided in a form of being recorded on a recording medium such as a compact disc read only memory (CD-ROM), a digital versatile disc read only memory (DVD-ROM), and a Universal Serial Bus (USB) memory. The recording program 30 may be downloaded from an external device through a network.

The disclosure of JP2019-171509 filed on September 20, 2019 is incorporated herein by reference in its entirety. All documents, patent applications, and technical standards described in this specification are incorporated by reference in this specification to the same extent as in a case where the incorporation of each individual document, patent application, and technical standard by reference is specifically and individually described.

## Claims

1. A recording device comprising:
an acquisition unit that acquires, for attached information attached to each of a plurality of recording target data recorded on a recording medium, a first relevance degree which is a relevance degree between pieces of the attached information according to a frequency at which data other than the recording target data attached with information having the same contents as the attached information is read out within a period determined in advance;
a second-relevance-degree derivation unit that derives, for each combination of a plurality of recording target data included in the plurality of recording target data, a second relevance degree which is a relevance degree between pieces of data representing a possibility that the plurality of recording target data included in the combination is read out within the period based on the first relevance degree; and
a control unit that classifies the plurality of recording target data into groups based on the second relevance degree and performs control of recording the classified data on the recording medium for each group.

2. The recording device according to claim 1,
wherein the second relevance degree is a value derived for each combination of the plurality of recording target data and is a value that increases as a possibility that combinations of the plurality of recording target data are read out within the period is higher, and
the control unit classifies each of the plurality of recording target data included in a combination having the second relevance degree equal to or higher than a threshold value into the same group.

3. The recording device according to claim 2,
wherein the control unit classifies the plurality of recording target data into groups while changing the threshold value such that the number of the recording target data included in the same group or a size of the recording target data included in the same group is equal to or less than a value determined in advance.

4. The recording device according to any one of claims 1 to 3, further comprising:
a first-relevance-degree derivation unit that derives the first relevance degree.

5. The recording device according to any one of claims 1 to 4, further comprising:
a storage unit that stores the first relevance degree.

6. The recording device according to any one of claims 1 to 5,
wherein the recording medium is a magnetic tape.

7. A recording method executed by a computer, the method comprising:
acquiring, for attached information attached to each of a plurality of recording target data recorded on a recording medium, a first relevance degree which is a relevance degree between pieces of the attached information according to a frequency at which data other than the recording target data attached with information having the same contents as the attached information is read out within a period determined in advance;
deriving, for each combination of the plurality of recording target data included in the plurality of recording target data, a second relevance degree which is a relevance degree between pieces of data representing a possibility that the plurality of recording target data included in the combination is read out within the period based on the first relevance degree; and
classifying the plurality of recording target data into groups based on the second relevance degree and performing control of recording the classified data on the recording medium for each group.

8. A recording program causing a computer to execute a process comprising:
acquiring, for attached information attached to each of a plurality of recording target data recorded on a recording medium, a first relevance degree which is a relevance degree between pieces of the attached information according to a frequency at which data other than the recording target data attached with information having the same contents as the attached information is read out within a period determined in advance;
deriving, for each combination of the plurality of recording target data included in the plurality of recording target data, a second relevance degree which is a relevance degree between pieces of data representing a possibility that the plurality of recording target data included in the combination is read out within the period based on the first relevance degree; and
classifying the plurality of recording target data into groups based on the second relevance degree and performing control of recording the classified data on the recording medium for each group.

9. A magnetic tape on which a plurality of recording target data are recorded,
wherein the plurality of recording target data are recorded for each group into which the plurality of recording target data are classified based on a second relevance degree, which is derived based on a first relevance degree, for each combination of the plurality of recording target data included in the plurality of recording target data, the first relevance degree being a relevance degree between pieces of the attached information according to a frequency at which data other than the recording target data attached with information having the same contents as the attached information is read out within a period determined in advance for attached information attached to each of the plurality of recording target data, the second relevance degree being a relevance degree between pieces of data representing a possibility that the plurality of recording target data included in the combination is read out within the period based on the first relevance degree.
